# EUROPÄISCHE PATENTANMELDUNG

(11) **EP 4 563 391 A1**
(43) Veröffentlichungstag der Anmeldung: **04.06.2025**
(21) Anmeldenummer: 24213184.5
(22) Anmeldetag: 15.11.2024
(51) Int. Cl.: B60L 3/04, B60L 53/30, B60L 53/31, B60L 53/62, B60L 53/66, H02J 7/00, H02J 7/04

(54) **LADESTATION FÜR EIN ELEKTROFAHRZEUG**

(30) Priorität: 20.11.2023 DE 102023132194
(71) Anmelder: Bender GmbH & Co. KG, 35305 Grünberg (DE)
(72) Erfinder: MÖLL, Winfried, 35321 Laubach (DE)
(74) Vertreter: advotec.

(57) **Zusammenfassung**

Die Erfindung betrifft eine Ladestation (20) für ein Elektrofahrzeug (6), mit einer Ladesteuereinrichtung (18) zur Steuerung eines Ladevorgangs, einem Schaltglied (14) zum Schalten eines Ladestroms und mit einer Fehlerstrom-Schutzeinrichtung (10, 12) zur Erkennung eines Wechselfehlerstroms (10) und eines Gleichfehlerstroms (12), wobei die Fehlerstrom-Schutzeinrichtung (10, 12) und die Ladesteuereinrichtung (18) eine integrierte bauliche Einheit in Form einer ersten Schutz- und Steuereinrichtung (22) bilden. In einer weiteren Integrationsstufe kann zusätzlich das Schaltglied (14) zu einer zweiten Schutz- und Steuereinrichtung (32) in einer integrierten baulichen Einheit zusammengefasst werden. Alternativ kann ein Stellantrieb (15) zum Betätigen der Fehlerstrom-Schutzeinrichtung (10, 12) zu einer dritten Schutz- und Steuereinrichtung (34) in einer integrierten baulichen Einheit zusammengefasst werden, wobei die Fehlerstrom-Schutzeinrichtung (10, 12) im Zusammenwirken mit dem Stellantrieb (15) das Schaltglied (14) ersetzt.

## Beschreibung

Die Erfindung betrifft eine Ladestation für ein Elektrofahrzeug, mit einer Ladesteuereinrichtung zur Steuerung eines Ladevorgangs, einem Schaltglied/einer Schaltglied-Funktion zum Schalten eines Ladestroms und mit einer Fehlerstrom-Schutzeinrichtung zur Erkennung eines Wechselfehlerstroms und eines Gleichfehlerstroms.

Bekannte Ladestationen zum kabelgebundenen Laden von Elektrofahrzeugen (Wallbox) gemäß der Norm IEC 61851 umfassen als funktionale Hauptbestandteile eine Ladesteuereinrichtung, welche die primäre Aufgaben hat, den Ladevorgang zu steuern und zu überwachen, ein Schaltglied, welches diesen Ladestrom schaltet, sowie eine Fehlerstrom-Schutzeinrichtung.

Die Fehlerstrom-Schutzeinrichtung ermöglicht neben der Erkennung eines Wechselfehlerstroms die Detektion eines die Wechselfehlerstrom-Erkennung potenziell beeinträchtigenden (glatten) Gleichfehlerstroms.

Zur Erfüllung der in der jeweiligen Region geltenden normativen Vorgaben ist die Fehlerstrom-Schutzeinrichtung beispielsweise als RCD Typ A mit einer zusätzlichen Gleichfehlerstrom-Erkennung ausgestattet oder als eine allstromsensitive Fehlerstrom-Schutzeinrichtung RCD Typ B ausgeführt. Vorliegend sind unter dem Begriff Fehlerstrom-Schutzeinrichtung sämtliche elektrische Schutzeinrichtungen erfasst, die die Funktionalität eines RCD Typ A mit zusätzlicher Gleichfehlerstrom-Erkennung oder eines RCD Typ B besitzen. Entsprechende Ausführungen einer Fehlerstrom-Schutzeinrichtung wie sie beispielsweise in der US-Region Verwendung finden, werden oft als GFCI (Ground Fault Current Interrupter) oder als RCCB (Residual Current operated Circuit-Breaker) bezeichnet.

Als Nachteil der aus dem Stand der Technik bekannten Installationen erweist sich, dass die Fehlerstrom-Schutzeinrichtung als separate bauliche Einheit getrennt von der Ladesteuereinrichtung und dem Schaltglied ausgeführt ist und damit einen erhöhten Installationsaufwand verlangen. Insbesondere können zwar die normativen Anforderungen an die Trenneigenschaften der Fehlerstrom-Schutzeinrichtung durch die allstromfähige Fehlerstrom-Schutzeinrichtung erfüllt werden, jedoch erhöht dies die Kosten erheblich.

Der vorliegenden Erfindung liegt somit die Aufgabe zugrunde, eine Ladestation für Elektrofahrzeuge zu konzipieren, die unter Beachtung der normativen Anforderungen kostengünstig zu produzieren ist und deren Montageaufwand möglichst gering ist.

Diese Aufgabe wird in Verbindung mit den Merkmalen des Oberbegriffs in Anspruch 1 dadurch gelöst, dass die Fehlerstrom-Schutzeinrichtung und die Ladesteuereinrichtung eine integrierte bauliche Einheit in Form einer ersten Schutz- und Steuereinrichtung bilden.

Der Grundgedanke der vorliegenden Erfindung beruht mit diesem ersten, minimalen Integrationsansatz somit darauf, ausgehend von einer normativ vorgeschriebenen Fehlerstrom-Schutzeinrichtung die Ladesteuereinrichtung mit dieser Fehlerstrom-Schutzeinrichtung in einer integrierten baulichen Einheit zusammenzufassen.

Mit der Aufnahme der Funktion der Ladesteuerung in die normgemäße Fehlerstrom-Schutzeinrichtung entsteht eine erste Schutz- und Steuereinrichtung, die neben der Erkennung von Fehlerströmen zugleich die Aufgabe der Steuerung des Ladevorgangs erfüllt.

Weiter wird die Aufgabe in Verbindung mit den Merkmalen des Oberbegriffs in Anspruch 2 dadurch gelöst, dass in einer weitergehenden Integrationsstufe die Fehlerstrom-Schutzeinrichtung, die Ladesteuereinrichtung und das Schaltglied eine integrierte bauliche Einheit in Form einer zweiten Schutz- und Steuereinrichtung bilden.

In weiterer Ergänzung (der ersten Schutz- und Steuereinrichtung) wird somit durch die zusätzliche Integration des Schaltgliedes eine zweite Schutz- und Steuereinrichtung geschaffen. Die so gestaltete bauliche Einheit umfasst (neben der in der Fehlerstrom-Schutzeinrichtung normgemäß festgelegten Trenneigenschaft im Fehlerfall) die ebenfalls normgemäß vorgeschriebene Trennung des Ladestroms durch das Schaltglied.

Die Aufgabe wird in Verbindung mit den Merkmalen des Oberbegriffs in Anspruch 3 alternativ auch dadurch gelöst, dass abweichend von der vorbeschriebenen Integration des Schaltgliedes die Fehlerstrom-Schutzeinrichtung, die Ladesteuereinrichtung und ein Stellantrieb zum Betätigen der Fehlerstrom-Schutzeinrichtung eine integrierte bauliche Einheit in Form einer dritten Schutz- und Steuereinrichtung bilden, wobei die Fehlerstrom-Schutzeinrichtung im Zusammenwirken mit dem Stellantrieb die Funktion eines Schaltgliedes ausführen.

Die mit dem Stellantrieb erweiterte Fehlerstrom-Schutzeinrichtung ist dabei so ausgeführt, dass sie hinsichtlich der Trenneigenschaften die normativen Anforderungen erfüllt, die derzeit an das Schaltglied gestellt werden. Die Kombination aus Fehlerstrom-Schutzeinrichtung und Stellantrieb ersetzt somit das Schaltglied.

Daneben kann der Stellantrieb zum Wiedereinschalten der Fehlerstrom-Schutzeinrichtung dienen.

Vorzugsweise gilt für alle beanspruchten Schutz- und Steuereinrichtungen, dass die Erkennung eines Gleichfehlerstroms für einen Gleichfehlerstrom-Ansprechwert von 6mA ausgelegt ist.

Grundsätzlich ist der Gleichfehlerstrom-Ansprechwert entsprechend den normativen Vorgaben vorgebbar. Um eine mögliche Funktionsbeeinträchtigung bei der Wechselfehlerstrom-Erkennung durch zu hohe reine (glatte) Gleichfehlerströme zuverlässig zu erkennen, beträgt der Gleichfehlerstrom-Ansprechwert vorzugsweise 6mA.

Weiterhin kann die erste, zweite und dritte Schutz- und Steuereinrichtung jeweils mit einem oder mehreren der folgenden Ausstattungsmerkmale versehen werden: Netzteil, Modem, Erweiterungsschnittstellen, Energiemessfunktion, Implementierung des OCPP-Protokolls, Implementierung der PLC-Kommunikation.

Die Integration eines oder mehrerer der genannten Ausstattungsmerkmale ergeben ausgehend von einer ursprünglichen Fehlerstrom-Schutzeinrichtung weitere Schutz- und Steuereinrichtungen. Diese erlauben in einer einzigen baulichen Einheit über die Funktionen der Fehlerstromerkennung und der Steuerung eines Ladevorgangs hinaus auch die Einbeziehung in kundenspezifische Anwendungen wie beispielsweise Home Energy Management Systeme (HEMS) zur Optimierung der Energieströme in Verbindung mit PV-Anlagen oder die (Backend-)Kommunikation mit externen, gegebenenfalls übergeordneten, Steuereinheiten.

Als Modem kann insbesondere eine Anbindung an das Mobilfunknetz oder eine Ausstattung für Kurzstrecken-Funkstandards vorgesehen sein.

Die Erweiterungsschnittstellen sind bevorzugt zum Anschließen von Peripheriegeräten wie RFID-Leser oder für eine Ethernet-Verbindung ausgelegt.

Die erfindungsgemäßen Ladestationen mit den jeweiligen integralen, Schutz- und Steuereinrichtungen ermöglichen in vorteilhafter Weise aufgrund der kompakten Bauweise mit synergetischer Nutzung der Schnittstellen eine vereinfachte Montage und damit eine Reduzierung der Installationskosten. Zugleich werden die normativen Anforderungen, insbesondere mit Blick auf die elektrische Sicherheit, technisch und wirtschaftlich effizient erfüllt.

Weitere vorteilhafte Ausgestaltungsmerkmale ergeben sich aus den nachfolgenden Beschreibungen und den Zeichnungen, die bevorzugte Ausführungsformen der Erfindung anhand von Beispielen erläutern.

Es zeigen:
- **Fig. 1**: eine bekannte Ladestation für ein Elektrofahrzeug gemäß dem Stand der Technik,
- **Fig. 2**: eine erfindungsgemäße Ladestation mit erster Schutz- und Steuereinrichtung,
- **Fig. 3**: eine erfindungsgemäße Ladestation mit zweiter/dritter Schutz- und Steuereinrichtung und
- **Fig. 4**: ein funktionales Blockdiagramm der erfindungsgemäßen Ladestation mit möglichen Schutz- und Steuereinrichtungen.

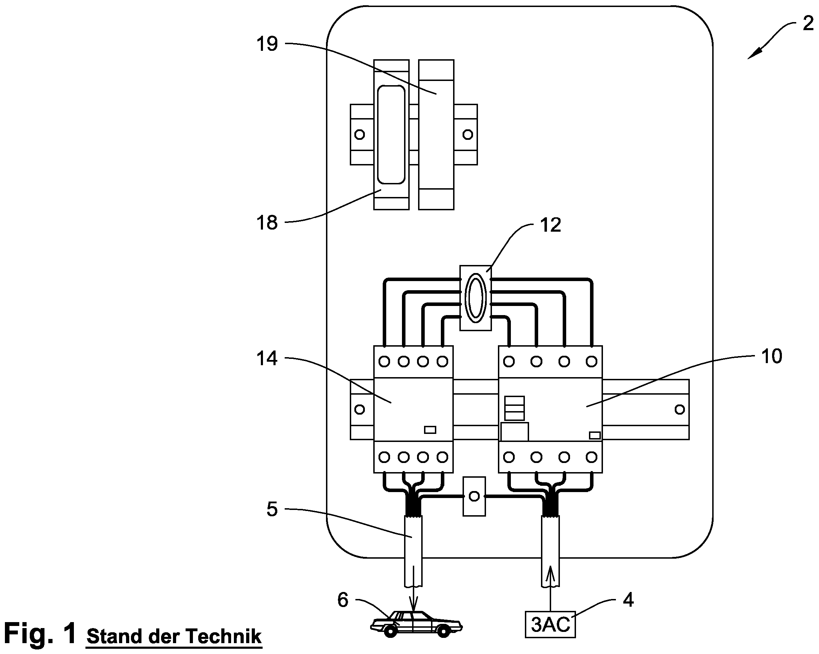

**Fig. 1** zeigt eine aus dem Stand der Technik bekannte Ladestation 2, die von einem 3AC-Stromversorgungssystem 4 gespeist wird und über ein Ladekabel 5 einen Ladestrom für ein Elektrofahrzeug 6 bereitstellt.

Beispielhaft und stellvertretend für Fehlerstrom-Schutzeinrichtungen 10, 12 gleicher Funktionalität werden im Folgenden zur Verdeutlichung der schutztechnischen Eigenschaften die Bezeichnungen RCD Typ A und RCD Typ B verwendet.

Netzseitig weist die Ladestation 2 eine Fehlerstrom-Schutzeinrichtung 10, 12 mit der Funktion zur Erkennung eines Wechselfehlerstroms 10 (RCD Typ A) sowie mit der Funktion zur 6 mA-Gleichfehlerstrom-Erkennung 12 (Gleichfehlerstrom-Messeinrichtung) auf.

Alternativ kann die Fehlerstrom-Schutzeinrichtung 10, 12 als allstromsensitive Fehlerstrom-Schutzeinrichtung (RCD Typ B) ausgeführt und damit auch zur Erkennung von (glatten) Gleichfehlerströmen geeignet sein.

Ausgangsseitig besitzt die Ladestation 2 ein Schaltglied 14 zum Schalten des Ladestroms.

Weiterhin weist die Ladestation 2 in einer von der Fehlerstrom-Schutzeinrichtung 10 getrennten baulichen Einheit eine Ladesteuereinrichtung 18 auf. Zur internen Stromversorgung umfasst die Ladestation 2 ein Netzteil 19.

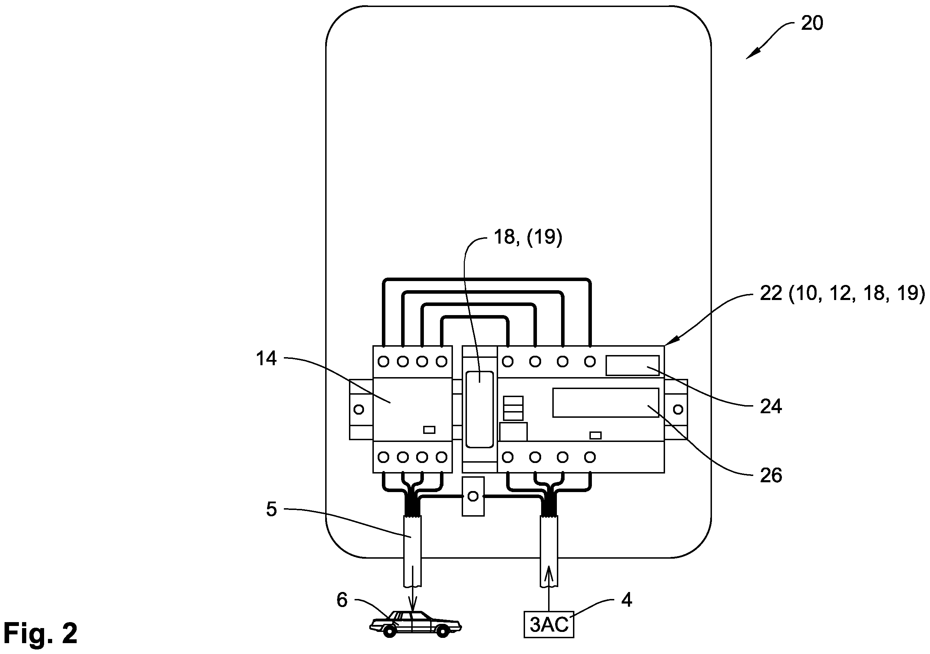

In **Fig. 2** ist eine erfindungsgemäße Ladestation 20 mit einer ersten Schutz- und Steuereinrichtung 22 dargestellt.

Die erste Schutz- und Steuereinrichtung 22 umfasst in einer baulichen Einheit aufbauend auf der Fehlerstrom-Schutzeinrichtung 10,12 zur Erkennung eines Wechselfehlerstroms (Wechselfehlerstrom-Messeinrichtung RCD Typ A) 10 und der 6 mA-Gleichfehlerstrom-Erkennung (Gleichfehlerstrom-Messeinrichtung) 12 auch die Ladesteuereinrichtung 18 mit - hier beispielhaft integriertem - Netzteil 19.

Das als Relais oder Schütz ausgeführte Schaltglied 14 ist in dieser Ausgestaltung wie aus dem Stand der Technik nach Fig.1 bekannt als separate bauliche Einheit ausgeführt.

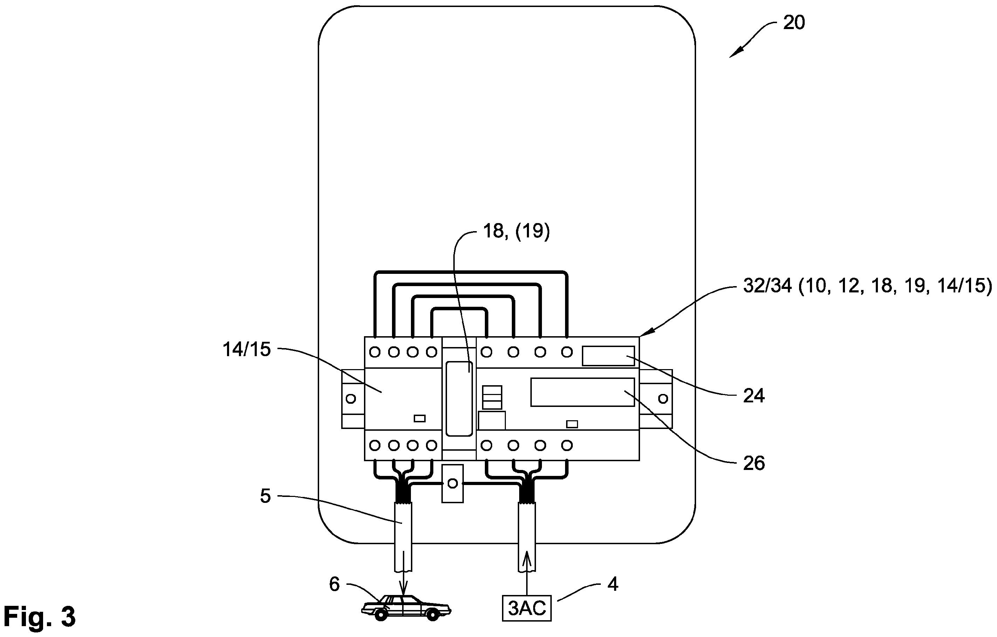

In **Fig. 3** ist eine erfindungsgemäße Ladestation 20 mit einer zweiten/dritten Schutz- und Steuereinrichtung 32/34 gezeigt.

Zusätzlich zu der vorbeschriebenen Integration der Ladesteuereinrichtung 18 (mit Netzteil 19) ist in einer weiteren Integrationsstufe das Schaltglied 14 in Form einer zweiten Schutz- und Steuereinrichtung 32 als eine bauliche Einheit auf Basis der Fehlerstrom-Schutzeinrichtung 10, 12 zusammengefasst.

Alternativ zur Integration des Schaltgliedes 14 ist ein Stellantrieb 15 zum Betätigen der Fehlerstrom-Schutzeinrichtung 10, 12 in Form einer dritten Schutz- und Steuereinrichtung 34 als eine bauliche Einheit auf Basis der Fehlerstrom-Schutzeinrichtung 10, 12 zusammengefasst.

In der Ausführung als dritte Schutz- und Steuereinrichtung 34 ersetzt dabei die mit dem Stellantrieb 15 ausgestattete Fehlerstrom-Schutzeinrichtung 10, 12 das in der zweiten Schutz- und Steuereinrichtung 32 vorhandene Schaltglied 14.

Die erfindungsgemäßen Ladestationen 20 weisen Erweiterungsschnittstellen 24 sowie Anzeige- und Bedienelemente 26 auf.

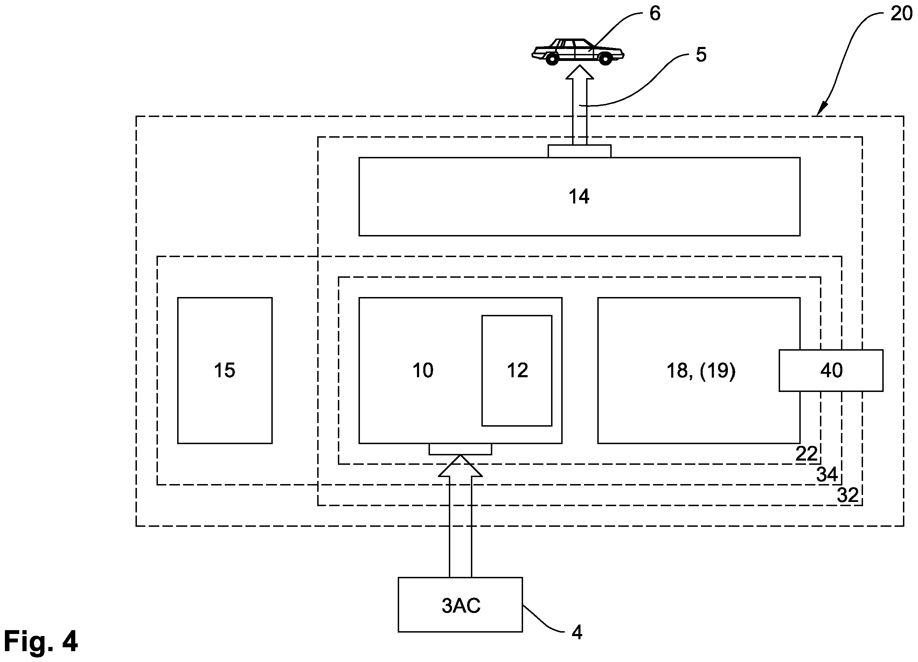

**Fig. 4** zeigt zusammenfassend ein funktionales Blockdiagramm der erfindungsgemäßen Ladestationen 20 mit möglichen Schutz- und Steuereinrichtungen 22, 32, 34.

Die möglichen Schutz- und Steuereinrichtungen 22, 32, 34 zeigen in einer Übersicht die unterschiedlichen Integrationsmöglichkeiten, die sich durch die erfindungsgemäße Zusammenfassung unterschiedlicher Funktionalitäten ergeben. Optionale Ausstattungsmerkmale 40 können dabei in jede der möglichen Schutz- und Steuereinrichtungen 22, 32, 34 einbezogen werden.

## Patentansprüche

1. Ladestation (20) für ein Elektrofahrzeug (6), mit einer Ladesteuereinrichtung (18) zur Steuerung eines Ladevorgangs, einem Schaltglied (14) zum Schalten eines Ladestroms und mit einer Fehlerstrom-Schutzeinrichtung (10, 12) zur Erkennung eines Wechselfehlerstroms (10) und eines Gleichfehlerstroms (12),
**dadurch gekennzeichnet,**
**dass** die Fehlerstrom-Schutzeinrichtung (10, 12) und die Ladesteuereinrichtung (18) eine integrierte bauliche Einheit in Form einer ersten Schutz- und Steuereinrichtung (22) bilden.

2. Ladestation (20) für ein Elektrofahrzeug (6), mit einer Ladesteuereinrichtung (18) zur Steuerung eines Ladevorgangs, einem Schaltglied (14) zum Schalten eines Ladestroms und mit einer Fehlerstrom-Schutzeinrichtung (10, 12) zur Erkennung eines Wechselfehlerstroms (10) und eines Gleichfehlerstroms (12),
**dadurch gekennzeichnet,**
**dass** die Fehlerstrom-Schutzeinrichtung (10, 12), die Ladesteuereinrichtung (18) und das Schaltglied (14) eine integrierte bauliche Einheit in Form einer zweiten Schutz- und Steuereinrichtung (32) bilden.

3. Ladestation (20) für ein Elektrofahrzeug (6), mit einer Ladesteuereinrichtung (18) zur Steuerung eines Ladevorgangs, einer Schaltglied-Funktion (14) zum Schalten eines Ladestroms und mit einer Fehlerstrom-Schutzeinrichtung (10, 12) zur Erkennung eines Wechselfehlerstroms (10) und eines Gleichfehlerstroms (12),
**dadurch gekennzeichnet,**
**dass** die Fehlerstrom-Schutzeinrichtung (10, 12), die Ladesteuereinrichtung (18) und ein Stellantrieb (15) zum Betätigen der Fehlerstrom-Schutzeinrichtung (10, 12) eine integrierte bauliche Einheit in Form einer dritten Schutz- und Steuereinrichtung (34) bilden, wobei die Fehlerstrom-Schutzeinrichtung (10, 12) im Zusammenwirken mit dem Stellantrieb die Funktion eines Schaltgliedes ausführen.

4. Ladestation (20) für ein Elektrofahrzeug (6) nach einem der Ansprüche 1 bis 3,
**dadurch gekennzeichnet,**
**dass** die Erkennung eines Gleichfehlerstroms (12) für einen Gleichfehlerstrom-Ansprechwert von 6mA ausgelegt ist.

5. Ladestation (20) für ein Elektrofahrzeug (6) nach einem der Ansprüche 1 bis 4,
**dadurch gekennzeichnet,**
**dass** die jeweilige gemäß den Ansprüchen 1 bis 4 erweiterte Fehlerstrom-Schutzeinrichtung (22, 32, 34, 36) eines oder mehrere der folgenden Ausstattungsmerkmale (40) aufweist: ein Netzteil, ein Modem, Erweiterungsschnittstellen, eine Energiemessfunktion, eine Implementierung des OCPP-Protokolls, eine Implementierung der PLC-Kommunikation.
